# EUROPÄISCHE PATENTANMELDUNG

(11) **EP 0 976 964 A1**
(43) Veröffentlichungstag der Anmeldung: **02.02.2000**
(21) Anmeldenummer: 99112942.0
(22) Anmeldetag: 02.07.1999
(51) Int. Cl.: F16L 43/00, G01L 7/04

(54) **Rohrelement mit einer integrierten Druckmesseinheit**

(30) Priorität: 30.07.1998 DE 19834442
(71) Anmelder: Motoren Ventilatoren Landshut GmbH, 84030 Landshut (DE)
(72) Erfinder: Beerschwinger, Ulrich, 84034 Landshut (DE); Sturm, Manfred, 84032 Altdorf (DE); Mlinek, Manuel, 94209 Regen (DE)
(74) Vertreter: Beier, Ralph

(57) **Zusammenfassung**

Rohrelement (1), insbesondere in Form eines Krümmers, mit einer integrierten Druckmeßeinheit, die von einer Mündungsöffnung her in das Rohrelement (1) einschiebbar ist und einen Drucksensor aufweist, der an einem Trägerelement befestigt oder angeformt ist und im eingeschobenen Zustand im Rohrinneren angeordnet ist, wobei das Trägerelement zur mechanischen Fixierung der Druckmeßeinheit in eine in der Rohrwand angeordnete Einschuböffnung einschiebbar ist und die Einschuböffnung im eingeschobenen Zustand ausfüllt, wobei das Trägerelement und die Rohrwandung am Rand der Einschuböffnung zur Erreichung einer guten Abdichtung formschlüssig miteinander verbunden sind.

## Beschreibung

Die Erfindung betrifft ein Rohrelement mit einer integrierten Druckmeßeinheit gemäß dem Oberbegriff des Anspruchs 1.

Es sind Gaskrümmer bekannt, die zur Messung der Strömungsgeschwindigkeit zwei Druckmeßstutzen aufweisen. Der eine Druckmeßstutzen ist hierbei durch eine Bohrung in der Rohrwand des Gaskrümmers hindurchgeführt und mündet frei in der Strömung. Der andere Druckmeßstutzen ist dagegen seitlich an ein Venturirohr angeschweißt und wird bei der Montage ebenfalls durch eine Bohrung in der Rohrwand des Gaskrümmers hindurchgeführt. Aus der Druckdifferenz an den beiden Druckmeßstutzen läßt sich dann in bekannter Weise die Strömungsgeschwindigkeit in dem Gaskrümmer berechnen.

Nachteilig an diesem bekannten Gaskrümmer ist der hohe Aufwand zur Montage der Druckmeßstutzen, da diese aufwendig durch die Bohrungen in der Rohrwand hindurchgeführt werden müssen. Anschließend werden die Druckmeßstutzen in der Rohrwand fixiert, indem Muttern auf ein an der Außenseite der Druckmeßstutzen angeformtes Gewinde aufgeschraubt werden, was ebenfalls aufwendig ist. Ein weiterer Nachteil der bekannten Anordnung ist in dem großen Herstellungsaufwand zu sehen, der aus der Teilevielfalt resultiert.

Von der Firma VAILLANT werden Gasboiler der Typen MAG TURBO, TURBO TEC und TURBO TEC 120 vertrieben, die ebenfalls Rohrkrümmer enthalten. Bei diesen bekannten Rohrkrümmern ist die Druckmeßeinheit als Einschubmodul ausgebildet ist und kann über eine Mündungsöffnung in den Rohrkrümmer eingeschoben werden. Die Druckmeßeinheit besteht hierbei im wesentlichen aus zwei Druckmeßstutzen, die den statischen Druck bzw. den Gesamtdruck in der Strömung messen. Die Differenz beider Drücke wirkt auf eine Druckdose, die z.B. in einem Gasboiler das Gas freigibt oder abschaltet, wenn der Differenzdruck infolge einer Störung nicht erreicht wird. Die beiden Druckmeßstutzen sind hierbei an einem Trägerelement befestigt, das beim Zusammenbau von Rohrelement und Druckmeßeinheit in eine entsprechend geformte Aussparung in der Rohrwand geschoben wird, wobei die Stoßstelle zwischen dem Trägerelement und der Rohrwand durch eine separate Dichtung verschlossen wird.

Nachteilig hieran ist zum einen der erhöhte bauliche Aufwand durch die separate Dichtung. Zum anderen ist das Dichtungsmaterial anfällig gegen mechanische, chemische und thermische Einflüsse. Insbesondere die thermische Anfälligkeit der Dichtung erschwert einen Einsatz des bekannten Rohrelements mit der integrierten Druckmeßeinheit in einer Heizungsanlage.

Darüber hinaus weist die bekannte Druckmeßeinheit ein plattenförmiges Luftleitelement auf, das ebenfalls an dem Trägerelement befestigt ist und im eingebauten Zustand im wesentlichen mittig im Krümmer verläuft, um die Strömung zu führen, wodurch eine Wirbelbildung im Krümmer weitgehend verhindert wird.

Nachteilig hierbei ist, daß das Luftleitelement nur einseitig an dem Trägerelement befestigt ist und deshalb wegen der zur effektiven Strömungsführung erforderlichen großen Länge im Betrieb nicht hinreichend stabil ist. Bei großen Strömungsgeschwindigkeiten im Krümmer kann es deshalb zu einem "Flattern" des Luftleitelements kommen. Dies ist zum einen mit einer störenden Geräuschentwicklung verbunden und kann darüber hinaus zu Materialermüdungen führen.

Der Erfindung liegt deshalb die Aufgabe zugrunde, ein Rohrelement mit einer integrierten Druckmeßeinheit zu schaffen, das einen möglichst geringen baulichen Aufwand erfordert und darüber hinaus möglichst unempfindlich gegen mechanische, chemische und thermische Belastungen ist.

Diese Aufgabe wird, ausgehend von dem eingangs beschriebenen bekannten Rohrelement gemäß dem Oberbegriff des Anspruchs 1, durch die kennzeichnenden Merkmale des Anspruchs 1 gelöst.

Die Erfindung schließt die technische Lehre ein, die Abdichtung zwischen dem Trägerelement der Druckmeßeinheit und der Wandung des Rohrelements nicht durch eine separate und damit aufwendige Dichtung vorzunehmen, sondern die Verbindung zwischen Trägerelement und Rohrwand statt dessen formschlüssig auszuführen, um eine gute mechanische Fixierung des Trägerelements in der Rohrwand und gleichzeitig eine gute Dichtwirkung zu erreichen.

Vorzugsweise erfolgt die formschlüssige Verbindung hierbei durch eine Nut-Feder-Kombination. So ist es beispielsweise möglich, in der Rohrwandung am Umfangsrand der Einschuböffnung umlaufend eine Nut anzuformen, in die eine am Umfangsrand des Trägerelements angeformte Feder im zusammengebauten Zustand formschlüssig eingreift. Selbstverständlich ist es auch umgekehrt möglich, die Feder an dem Umfangsrand der Einschuböffnung anzuordnen und am Umfangsrand des Trägerelement eine entsprechend angepaßte Nut vorzusehen.

Darüber hinaus ist es auch möglich, mehrere nebeneinander liegenden Nuten bzw. Federn vorzusehen, die im zusammengebauten Zustand eine Labyrinthdichtung bilden, wodurch die Dichtwirkung zwischen dem Trägerelement der Druckmeßeinheit und der Rohrwand weiter erhöht wird. Dies ist besonders dann vorteilhaft möglich, wenn die Rohrwand ausreichend dick ist, um mehrere Nuten bzw. Federn nebeneinander anordnen zu können.

Die Nut-Feder-Verbindung zwischen dem Trägerelement und der Rohrwandung bildet dabei vorzugsweise eine Preßpassung. Dadurch wird eine gute Dichtwirkung und ein spielfreier Festsitz der Druckmeßeinheit erreicht.

In einer vorteilhaften Variante der Erfindung verjüngt sich die Einschuböffnung in der Rohrwandung nach innen hin keilförmig, so daß beim Einschieben der Druckmeßeinheit mit einem entsprechenden Einschubdruck eine Preßpassung zwischen dem Trägerelement und der Einschuböffnung herstellen läßt, wodurch die Dichtwirkung verbessert und ein spielfreier Festsitz erreicht wird.

Gemäß einer weiteren Variante der Erfindung bestehen das Trägerelement der Druckmeßeinheit und die Rohrwandung aus Materialien mit unterschiedlichen Wärmeausdehnungskoeffizienten, so daß sich beim Einsatz aufgrund der Temperaturänderung und der damit verbundenen unterschiedlichen Wärmeausdehnung von Trägerelement und Rohrwand eine Preßpassung mit entsprechend guter Dichtwirkung ausbildet.

Zu diesem Zweck muß das Trägerelement beim Transport von heißen Gasen beispielsweise in einer Heizungsanlage eine größere Wärmeausdehnung aufweisen als die Rohrwand, um eine Preßpassung zu bilden.

Beim Transport von kalten Gasen beispielsweise in einer Klimaanlage muß dagegen die Rohrwandung eine größere Wärmeausdehnung aufweisen, um im Betrieb die gewünschte Preßpassung zu erzeugen.

In einer weiteren Variante der Erfindung ist das Rohrelement als Krümmer ausgebildet, wobei an dem Rohrelement innen ein plattenförmiges Luftleitelement angeformt oder befestigt ist, um den Luftstrom entsprechend der Rohrkrümmung umzuleiten. Das Luftleitelement wirkt hierbei zusätzlich als Versteifungsrippe und erhöht dadurch die mechanische Festigkeit des Rohrelements. Darüber hinaus ist an dem Trägerelement der Druckmeßeinheit ein weiteres plattenförmiges Luftleitelement befestigt, um die Strömung entsprechend der Rohrkrümmung umzuleiten. Die beiden Luftleitelemente sind hierbei nicht unabhängig voneinander, sondern schließen im zusammengebauten Zustand aneinander an oder gehen ineinander über und bilden somit zwei Teile einer Luftleiteinrichtung. Durch diese Aufteilung kann das an dem Trägerelement der Druckmeßeinheit befestigte Luftleitelement wesentlich kürzer ausgeführt sein, wodurch die mechanische Stabilität erhöht und das eingangs beschriebene "Flattern" bei großen Strömungsgeschwindigkeit verhindert wird. Darüber hinaus können die Umlenkverluste auf diese Weise so stark reduziert werden, daß kleinere Gebläsemotoren verwendet werden können.

Das erfindungsgemäße Rohrelement mit der integrierten Druckmeßeinheit eignet sich nicht nur zur Führung von Luftströmungen, sondern kann prinzipiell auch in Rohrleitungssystemen verwendet werden, die andere Fluide transportieren. Die vorliegende Beschreibung sowie die zugehörigen Ansprüche sind deshalb allgemein ohne Beschränkung auf den Einsatz mit Luft als Strömungsmedium zu verstehen.

Weiterhin ist zu bemerken, daß die Druckmessung auch anders erfolgen kann als bei dem eingangs beschriebenen bekannten Rohrelement, bei dem eigentliche Messung durch ein außerhalb des Rohrelements befindliches Meßgerät erfolgt, das über Druckstutzen mit dem Rohrinneren verbunden ist. Stattdessen ist es auch möglich, das Druckmeßgerät in miniaturisierter Form im Rohrinneren anzuordnen und lediglich die Signalleitungen des Druckmeßgeräts aus dem Rohrelement herauszuführen.

Neben den bereits vorstehend beschriebenen Vorteilen bietet die erfindungsgemäße Anordnung auch die Möglichkeit, verschiedene Druckmeßeinheiten vorzusehen, die an unterschiedliche Verhältnisse angepaßt sind. Bei der Montage des Rohrelements wird dann diejenige Druckmeßeinheit ausgewählt und eingeschoben, die an die Betriebsbedingungen optimal angepaßt ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: als bevorzugtes Ausführungsbeispiel der Erfindung einen Rohrkrümmer mit einer integrierten Druckmeßeinheit als Einschubmodul in perspektivischer Darstellung,
- Fig. 2: den in Fig. 1 dargestellten Rohrkrümmer ohne die Druckmeßeinheit in perspektivischer Darstellung,
- Fig. 3: den Rohrkrümmer mit eingebauter Druckmeßeinheit in einer Querschnittsdarstellung,
- Fig. 4: den Rohrkrümmer ohne Druckmeßeinheit in Seitenansicht,

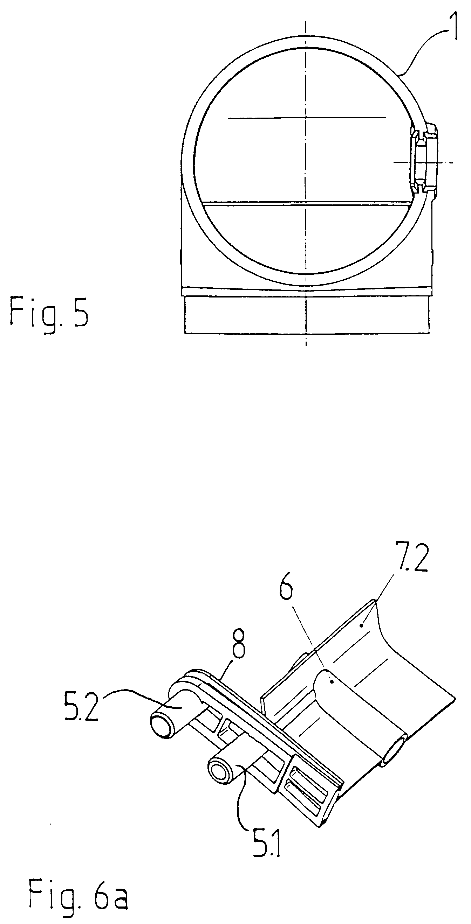

- Fig. 4: den Rohrkrümmer ohne Druckmeßeinheit in Frontansicht sowie

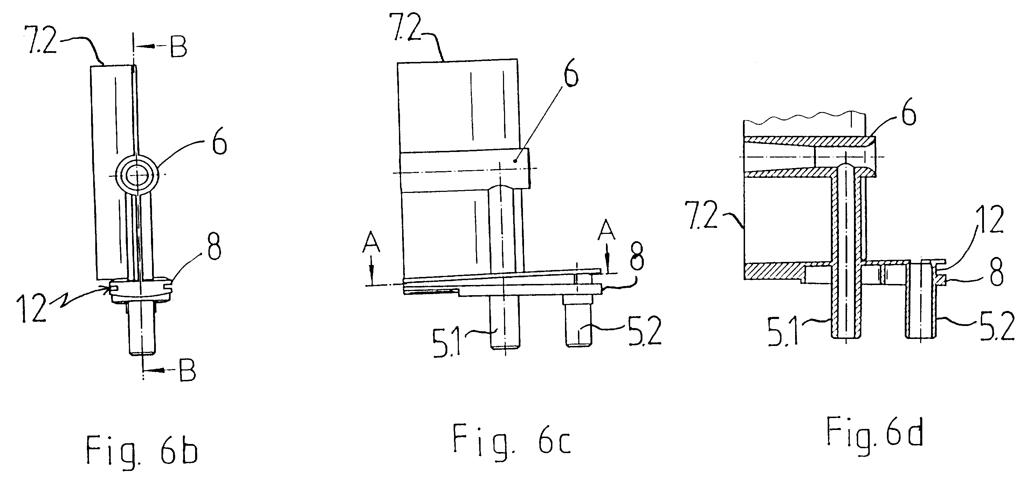

- Fig. 6a-6d: die Druckmeßeinheit in verschiedenen Darstellungen.

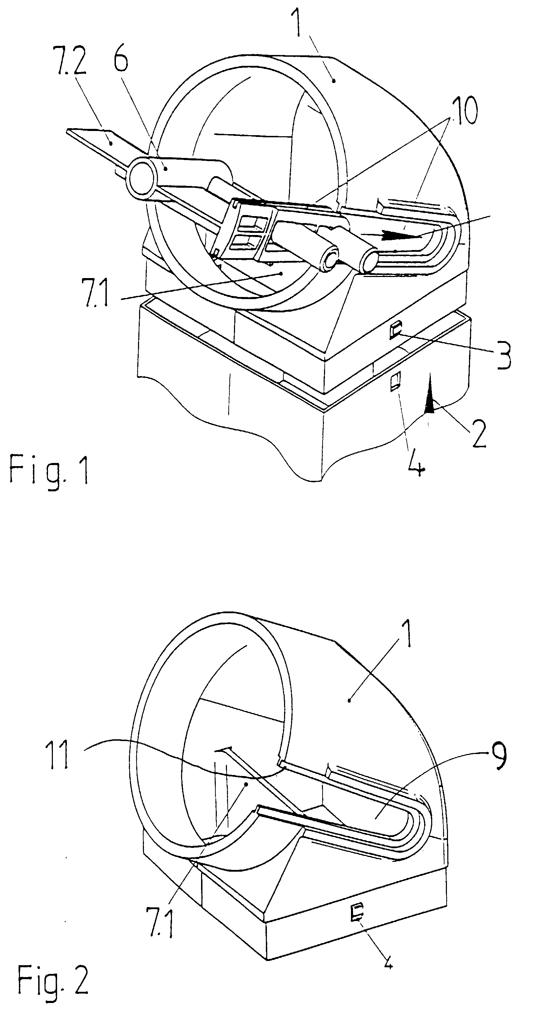

Der in Figur 1 als bevorzugtes Ausführungsbeispiel der Erfindung dargestellte Rohrkrümmer 1 besteht aus kostengünstigem Aluminium-Druckguß und weist eine rechteckige Eintrittsöffnung sowie eine kreisförmige Austrittsöffnung auf.

Zur eingangsseitigen Verbindung des Krümmers 1 mit einer Rohrleitung 2 weist der Krümmer 1 an seiner Außenseite im Bereich der Eintrittsöffnung Rastvorsprünge 3 auf, die in entsprechende Aussparungen 4 in der Wand der anzuschließenden Rohrleitung eingreifen 2 und den Rohrkrümmer 1 dadurch mit der Rohrleitung 2 mechanisch verbinden. Der Krümmer 1 muß also bei der Montage lediglich auf das freie Ende der Rohrleitung 2 oder direkt auf den Gebläseauslaß aufgesteckt werden und verrastet dann damit.

Zur Messung der Druckdifferenz weist der Krümmer 1 eine integrierte Druckmeßeinheit auf, die als Einschubmodul ausgeführt und detailliert in den Figuren 6a bis 6d wiedergegeben ist. Die Druckmeßeinheit verfügt über zwei Druckmeßstutzen 5.1, 5.2 auf, deren Mündungsöffnungen rechtwinklig zur Strömungsrichtung angeordnet ist, so daß die beiden Druckmeßstutzen 5.1, 5.2 jeweils den statischen Druck in der Strömung erfassen.

Der eine Druckmeßstutzen 5.1 mündet hierbei seitlich in der Engsteile eines Venturirohrs 6, das im eingebauten Zustand der Druckmeßeinheit zentrisch in dem Krümmer 1 angeordnet ist.

Der andere Druckmeßstutzen 5.2 endet dagegen frei in der Strömung. Die Differenz der beiden statischen Drücke kann von einem Druckmeßgerät angezeigt werden oder eine Druckdose aktivieren. Die eigentliche Verarbeitung der Drücke erfolgt außerhalb des Krümmers 1. Zum Anschluß an die Auswerteeinheit sind die beiden Druckmeßstutzen 5.1, 5.2 seitlich aus dem Krümmer 1 herausgeführt.

Darüber hinaus weist der dargestellte Krümmer 1 eine Luftleiteinrichtung auf, die aus zwei plattenförmigen Luftleitelementen 7.1, 7.2 besteht.

Das eine Luftleitelement 7.1 ist hierbei innen an den Krümmer 1 angeformt und bildet somit zusätzlich eine Versteifungsrippe, welche die mechanische Festigkeit des Krümmers 1 erhöht.

Das andere Luftleitelement 7.2 ist dagegen an die Druckmeßeinheit angeformt und geht seitlich von der Venturidüse 6 ab.

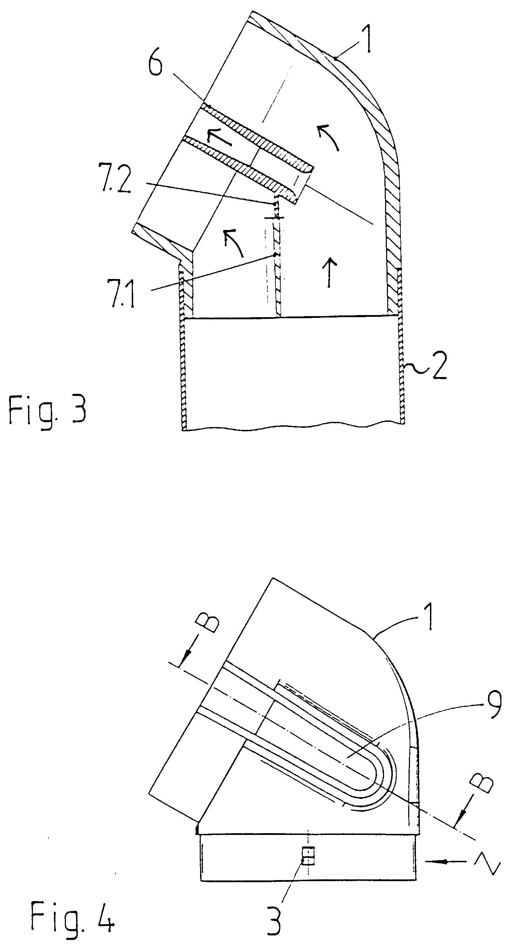

Die beiden Luftleitelemente 7.1, 7.2 sind hierbei nicht unabhängig voneinander, sondern gehen im eingebauten Zustand der Druckmeßeinheit stufenlos und knickfrei ineinander über, wie beispielsweise aus Figur 3 ersichtlich ist. Durch die Aufteilung der Luftleiteinrichtung in die beiden Luftleitelemente 7.1, 7.2 kann das an der Druckmeßeinheit angeformte Luftleitelement 7.2 wesentlich kürzer ausgeführt werden, wodurch das bei den eingangs beschriebenen bekannten Anordnungen auftretende Flattern des an der Druckmeßeinheit angeformten Luftleitelements 7.2 verhindert wird.

Neben den beiden Druckmeßstutzen 5.1, 5.2, dem Venturirohr 6 und dem Luftleitelement 7.2 weist die Druckmeßeinheit noch ein Trägerelement 8 auf, das die Montage und die mechanische Fixierung der Druckmeßeinheit in dem Krümmer 1 ermöglicht. Die gesamte Druckmeßeinheit ist hierbei als einheitliches Bauteil aus einem hochtemperaturbeständigem Kunststoff gefertigt, der einen Betrieb bis zu einer Temperatur von T=473K zuläßt. Die einheitliche Fertigung der Druckmeßeinheit als Kunststoffteil ermöglicht eine einfache Montage, da die Druckmeßeinheit lediglich in den Krümmer 1 eingeschoben werden muß.

Zur Montage und mechanischen Fixierung der Druckmeßeinheit weist der Krümmer 1 in der Rohrwand seitlich eine axial verlaufende Einschuböffnung 9 auf, die an das Trägerelement 8 der Druckmeßeinheit angepaßt ist. Beim Einschieben der Druckmeßeinheit in den Krümmer 1 gleitet das Trägerelement 8 in die Einschuböffnung 9 hinein und schließt diese im eingebauten Zustand vollständig ab. Zur Abdichtung der Stoßstelle zwischen dem Trägerelement 8 und dem Umfangsrand der Einschuböffnung 9 ist eine Nut-Feder-Verbindung 10 zwischen dem Trägerelement 8 und der Rohrwand vorgesehen. Hierzu ist am Umfangsrand der Einschuböffnung 9 eine umlaufende Feder 11 an der Rohrwand angeformt, die in eine entsprechend angepaßte Nut 12 eingreift, die am Umfangsrand des Trägerelements 8 angeordnet ist. Neben der Dichtwirkung führt die Nut-Feder-Verbindung 10 auch zu einer mechanischen Fixierung der Druckmeßeinheit in dem Krümmer 1.

Zur weiteren Verbesserung der Dichtwirkung verjüngt sich die Einschuböffnung 9 nach innen hin keilförmig, so daß beim Einschieben der Druckmeßeinheit eine Preßpassung zwischen dem Trägerelement 8 und der Rohrwand entsteht, was zu einer entsprechend guten Dichtwirkung führt.

Darüber hinaus bestehen das Trägerelement 8 und die Rohrwandung aus Materialien mit einem unterschiedlichen Wärmeausdehnungskoeffizienten, wobei das Trägerelement 8 eine größere Wärmeausdehnung aufweist als die Rohrwandung, so daß sich beim Einsatz aufgrund der Erhitzung durch die heißen Gase eine Preßpassung zwischen dem Trägerelement 8 und der Rohrwandung bildet, wodurch die Dichtwirkung zusätzlich verbessert wird.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Rohrelement (1), insbesondere in Form eines Krümmers, mit einer integrierten Druckmeßeinheit, die von einer Mündungsöffnung her in das Rohrelement (1) einschiebbar ist und einen Drucksensor (5.1, 5.2) aufweist, der an einem Trägerelement (8) befestigt oder angeformt ist und im eingeschobenen Zustand im Rohrinneren angeordnet ist, wobei das Trägerelement (8) zur mechanischen Fixierung der Druckmeßeinheit in eine in der Rohrwand angeordnete Einschuböffnung (9) einschiebbar ist und die Einschuböffnung (9) im eingeschobenen Zustand ausfüllt,
**dadurch gekennzeichnet**,
daß das Trägerelement (8) und die Rohrwandung am Rand der Einschuböffnung (9) zur Erreichung einer guten Abdichtung formschlüssig miteinander verbunden sind.

2. Rohrelement (1) nach Anspruch 1, **dadurch gekennzeichnet**, daß das Trägerelement (8) und das Rohrelement (1) zur formschlüssigen Abdichtung der Einschuböffnung (9) eine Nut-Feder-Kombination bilden.

3. Rohrelement (1) nach Anspruch 1 oder 2, **dadurch gekennzeichnet**, daß sich die Einschuböffnung (9) vom Mündungsrand nach innen hin keilförmig verjüngt.

4. Rohrelement (1) nach einem der vorhergehenden Ansprüche, **dadurch gekennzeichnet**, daß das Trägerelement (8) und das Rohrelement (1) aus Materialien mit unterschiedlichen Wärmeausdehnungskoeffizienten bestehen, um im Betrieb aufgrund der Erwärmung bzw. Abkühlung durch die transportierten Gase eine Preßpassung zwischen Trägerelement (8) und Rohrwand zu erzeugen.

5. Rohrelement (1) nach einem der vorhergehenden Ansprüche, **gekennzeichnet durch** die Ausbildung als Krümmer und ein an dem Rohrelement (1) befestigtes oder angeformtes erstes Luftleitelement (7.1) sowie ein an der Druckmeßeinheit befestigtes oder angeformtes zweites Luftleitelement (7.2), wobei die beiden Luftleitelemente (7.1, 7.2) im eingeschobenen Zustand der Druckmeßeinheit aneinander anschließen und/oder stufenlos und knickfrei ineinander übergehen.

6. Rohrelement (1) nach einem der vorhergehenden Ansprüche, **dadurch gekennzeichnet**, daß die Druckmeßeinheit ein an dem Trägerelement (8) befestigtes oder angeformtes Venturirohr (6) aufweist, in dem der Drucksensor (5.1) angeordnet ist.

7. Rohrelement (1) nach einem der vorhergehenden Ansprüche, **dadurch gekennzeichnet**, daß in der Rohrwand im Bereich der Eintrittsöffnung und/oder der Austrittsöffnung außen oder innen mindestens ein Rastvorsprung (3) oder eine entsprechende Aussparung angeordnet ist, um eine Verrastung mit einem anderen Rohrleitungselement (2) zu ermöglichen.

8. Rohrelement (1) nach einem der vorhergehenden Ansprüche, **dadurch gekennzeichnet**, daß die Druckmeßeinheit ein einheitliches Kunststoffteil ist.

9. Rohrelement (1) nach einem der vorhergehenden Ansprüche, **dadurch gekennzeichnet**, daß die Nut-Feder-Verbindung eine Preßpassung bildet.
